# EUROPÄISCHE PATENTSCHRIFT

(11) **EP 1 455 173 B1**
(45) Veröffentlichungstag und Bekanntmachung des Hinweises auf die Patenterteilung: **23.04.2008**
(21) Anmeldenummer: 03030048.7
(22) Anmeldetag: 19.12.2003
(51) Int. Cl.: G01M 17/007

(54) **Verfahren zum Betrieb eines Rollenprüfstandes sowie Rollenprüfstand**
Roller test bench and procedure for operating such roller test bench
Banc d'essai à roulaux et procédé d'opération ce banc d'essai à rouleaux

(30) Priorität: 03.03.2003 DE 10309247
(43) Veröffentlichungstag der Anmeldung: 08.09.2004
(73) Patentinhaber: SIEMENS AKTIENGESELLSCHAFT, 80333 München (DE)
(72) Erfinder: Michaelis, Gerd, 91096 Möhrendorf (DE); Pichler, Martin, 5203 Köstendorf (AT)

(56) Entgegenhaltungen:
- EP-A- 0 246 345
- WO-A-02/055979
- DE-A1- 3 920 277
- GB-A- 1 460 465

## Beschreibung

Die Erfindung betrifft ein Verfahren zum Betrieb eines Rollenprüfstandes mit den Merkmalen des Oberbegriffs des Patentanspruchs 1. Ferner betrifft die Erfindung einen Rollenprüfstand zur Durchführung des Verfahrens.

Als Stand der Technik sind Prüfstände zur Fahrsimulation in mehreren Varianten (Rollenprüfstände, Förderbänder) bekannt. Rollenprüfstände sind als Gegenstück zu einem Reifen ausgebildet, welche diesen aufnehmen und einer erzwungenen Bewegung folgen bzw. selbst eine Bewegung erzeugen können in der Form einer oder mehrerer drehbarer Rollen bzw. Walzen (Scheitel-, Doppelrollen). Förderbänder oder auf zwei oder mehreren drehbaren Zylindern gespannte, laufende und in sich geschlossene Bänder sind ebenfalls als Gegenstück zu einem Reifen ausgebildet, welche diesen aufnehmen und einer erzwungenen Bewegung folgen bzw. selbst eine Bewegung erzeugen.

Bei einer ersten Antriebsart sind insbesondere mehrere Antriebe untereinander mechanisch über Rollen mit Riemen gekuppelt. Während der Beschleunigung bzw. Verzögerung werden die einzelnen Antriebe über Kupplungen miteinander mechanisch verbunden. Für den Fall, dass das System mittels eines Fahrzeuges beschleunigt wird, hängt die Geschwindig-keitsänderung von der Größe der Kräfte an der Oberfläche der Räder und von der mechanisch installierten Masse bzw. den Trägheitsmomenten sämtlicher in Bewegung zu setzender mechanischer Teile ab.

Bei einer weiteren Antriebsart wird jeweils eine Einheit (also ein Antriebsstrang, welcher ein Rad aufnehmen kann) mit einem Elektromotor angetrieben. Es gibt außer in Servicebetriebsarten keine mechanische Verbindung zwischen den Einheiten, falls mehrere vorhanden sind. Eine Einheit oder zwei Einheiten (1 Achse) wird als Master bestimmt. Es besteht die Möglichkeit, dass der Masterantrieb auf ein konstantes Drehmoment (positiv oder negativ- für Ent- oder Belastung) geregelt wird, der Antrieb ist aber nicht drehzahlgeregelt. Die aktuelle Geschwindigkeit des Masterantriebs wird gemessen und an die Slaveantriebe falls welche vorhanden sind als Sollwert weitergegeben. Dabei kann es auftreten, dass die Drehzahlen und die Geschwindigkeiten der vier Rollensätze voneinander abweichen, da keine mechanische Verbindung zwischen den einzelnen Rollen und Antriebe existiert

Aus der EP 0 246 345 A1 ist bekannt, das Reaktionsmoment zwischen den Rollen und den vier Autorädern zu messen und anhand der Messungen die Antriebe der Rollen so zu steuern, dass sie unabhängig von einer Bremskraft auf die Rollen mit einer möglichst gleichbleibenden Geschwindigkeit drehen.

Aus der GB 1 460 465 ist bekannt, das Reaktionsmoment zwischen Rollen und Autorädern zu messen, um eine voreingestellte Sollgeschwindigkeit der Rollen unabhängig von einer Bremskraft auf die Rollen einhalten zu können. Hierbei wird das Reaktionsmoment mechanisch mittels einer Auslenkung eines Hebels abgetastet, der über seine Bewegung mit Hilfe eines Potentiometers ein Korrektursignal liefert. Dieses wird zur Korrektur des die Sollgeschwindigkeit angebenden Signals verwendet, so dass ein vom Reaktionsmoment abhängiger systematischer Fehler bei der Steuerung der Antriebe ausgeglichen und die Sollgeschwindigkeit konstant eingehalten wird.

Der Erfindung liegt die Aufgabe zugrunde, ein Verfahren zum Betrieb eines Rollenprüfstandes anzubieten, welches besonders realitätsnahe Erkenntnisse über das Reaktionsverhalten eines Kraftfahrzeugs vermitteln soll. Ferner soll ein Rollenprüfstand für ein derartiges Verfahren angeboten werden.

Die Aufgabe wird durch ein Verfahren mit den Merkmalen den kennzeichnenden Teils des Patentanspruchs 1 in Verbindung mit den Merkmalen des Oberbegriffs gelöst. Vorteilhafte Ausführungsvarianten des Verfahrens werden in den Unteransprüchen 2 - 8 beschrieben. Für den Rollenprüfstand wird die Aufgabe durch die Merkmale des Patentanspruchs 9 gelöst.

Beim erfindungsgemäßen Verfahren zum Betrieb eines Rollenprüfstandes zur Durchführung von Simulationsfahrten wird an mindesten einer der Rollen des Rollenprüfstandes das jeweilige Reaktionsmoment der Rollen gegenüber den Rädern des Fahrzeugs (z.B. eines Kraftfahrzeugs oder eines Motorrades) erfasst. Das unter Berücksichtigung der für den Prüfstand selbst als Reibung oder Beschleunigung nötigen Verluste ermittelte Reaktionsmoment wird über den Radius der jeweiligen Rolle in eine Reaktionskraft umgerechnet (Reaktionskraft F = Reaktionsmoment M/ Radius r). Damit wird für die Rolle des Rollenprüfstandes eine Reaktionskraft ermittelt. Diese Ermittlung einer Reaktionskraft sowie die weiteren geschilderten Verfahrensvarianten sind auch analog auf Prüfstände mit Förderbändern anwendbar.

Die Reaktionskräfte sämtlicher Rollen können nun addiert werden, so dass eine Gesamtreaktionskraft der Rollen ermittelt wird. Ausgehend von der einzelnen Reaktionskraft oder von den aufaddierten Reaktionskräften und der Fahrzeugmasse m wird die Beschleunigung ermittelt, der das Kraftfahrzeug im realen Verkehr auf der Straße ausgesetzt wäre (Beschleunigung a = Reaktionskraft F/Fahrzeugmasse m).

Nun wird im Regelkreislauf die Sollgeschwindigkeit anhand der ermittelten Beschleunigung korrigiert und werden die einzelnen angetriebenen Rollen entsprechend beschleunigt bzw. abgebremst, bis die Sollgeschwindigkeit erreicht wird bzw. bis die Reaktionskräfte keine Beschleunigung oder Verzögerung mehr anfordern.

Bei vorliegenden und ermittelten Reaktionsmomenten und damit auch Reaktionskräften kann damit die ermittelte Sollgeschwindigkeit durch Beschleunigung bzw. Abbremsen der einzelnen Rollen ständig an die reale Geschwindigkeit herangeführt werden. Dies geschieht durch einen an sich bekannten Regelkreislauf.

Beim erfindungsgemäßen Verfahren können neben den auftretenden Reaktionskräften an den einzelnen Rollen auch weitere Kräfte (z.B. Steigungskräfte, Luftwiderstandskräfte) in die Addition der Reaktionskräfte einbezogen und hierdurch eine erhöhte bzw. entsprechend erniedrigte Beschleunigung ermittelt werden, so dass eine erhöhte bzw. erniedrigte Sollgeschwindigkeit ermittelt wird. Hierdurch werden die Möglichkeiten der Simulation realitätsnäher.

Ferner wird die exakte Fahrzeugmasse m bei der Ermittlung der Sollgeschwindigkeit berücksichtigt.

Die Erfindung ist anhand eines Schaltungsbeispiels zur Regelung des Rollenprüfstandes in der Zeichnungsfigur näher erläutert.

Die Regelung besteht aus vier unterlagerten Regelkreisen (für 4 Rollen für ein Kraftfahrzeug mit 4 Rädern), mit denen die Geschwindigkeit jeder einzelnen Rolle geregelt wird. Überlagert dazu gibt es einen Regelkreis, der einen selbstgeführten Betrieb ermöglicht, wobei die Beschleunigung (Gas geben) oder Verzögerung (Bremsen) des Fahrzeuges zu einer Anpassung der Rollengeschwindigkeit führt.

Die vier unterlagerten Regelkreise werden in der Zeichnungsfigur durch strichpunktierte Linien markiert. Die Funktion lässt sich am einfachsten wie folgt beschreiben, wobei die Erläuterungen bei v_soll beginnen:
1. Die Sollgeschwindigkeit v_soll wird auf die maximale Geschwindigkeit v_max und die minimale Geschwindigkeit v_min beschränkt. Typische Werte könnten beispielsweise 200 km/h und 30 km/h sein.
2. Der Sollwert wird mit dem Ist-Wert verglichen und die Differenz gebildet.
3. Der Regler berechnet ein geeignetes Drehmoment M_brems, zu dem M_zusatz addiert wird. M_zusatz kompensiert die Beschleunigung der Rollen und die Reibung im Prüfstand. Es handelt sich hierbei zunächst noch um digitale Rechenwerte, keine physikalischen Größen.
4. Das Drehmoment wird für alle Quadranten auf seinen durch die Leistungsdaten der Umrichter und Motoren festgelegen oder technologisch bedingten maximalen Wert begrenzt.
5. Der resultierende Wert wird als Vorgabe an den Umrichter weitergegeben, der den Motor speist. Der Motor erzeugt mit hoher Genauigkeit ein reales, physikalisch messbares Drehmoment. Dieses Drehmoment kann durch eine Eichung reproduzierbar gemacht werden, welche die Rückführung auf ein Werksnormal ermöglicht.
6. Die Rolle mit dem eigenen Trägheitsmoment und dem Fahrzeug als Last reagiert auf das Drehmoment. Die resultierende Geschwindigkeit (Ist-Wert) wird gemessen.

Der abgebildete überlagerte Regelkreis (oberhalb der strichpunktierten Linien) ist nur im selbstgeführten Modus aktiv (auch: abgeschalteter Modus mit Schalterstellung auf v_prüf), der später genauer erläutert werden wird. Die Aktivierung dieses Modus erfolgt durch den Schalter 1, der das Umschalten zwischen v_geführt und v_prüf ermöglicht.

In der eingezeichneten Stellung ist der Modus aktiv. Im Ergebnis werden die Momente aller Rollen addiert und die Beschleunigung simuliert, die das Fahrzeug auf der Straße erfahren würde. Die Geschwindigkeit v_soll wird dann anhand der Beschleunigung korrigiert und an die unterlagerten Regelkreise (innerhalb der strichpunktierten Linien)weitergegeben. Im Einzelnen werden die folgenden Schritte durchlaufen:
1. Der oder die Fahrzeugreifen versuchen aufgrund äußerer Einwirkung (Betätigung von Gas oder Bremse) die absolute Drehzahl zu verändern.
2. An der Oberfläche des Gegenstücks zum Reifen wird eine Kraft übergeben, in weiterer Folge wird eine Soll-/Istabweichung vom Drehzahlregler erkannt
3. Der Drehzahlregler versucht dieser Abweichung entgegenzuwirken und (reagiert mit einem Drehmoment), stellt eine Stellgröße in der Form eines Drehmomentes bereit (das Vorzeichen ergibt sich je nach Vorzeichen der Soll-/Istabweichung ).
4. Das Bremsmoment wird über konstante Faktoren in eine Kraft umgerechnet (im speziellen Fall des Rollenprüfstand über den Radius der Rollen).
5. Die zu berücksichtigenden Achsen werden ausgewählt. Im Normalfall sind dies alle Achsen.
6. Die Kräfte aller Achsen werden summiert.
7. Die Gesamtkraft, die das Fahrzeug beschleunigt bzw. verzögert, wird durch die Fahrzeugmasse m geteilt: das Ergebnis ist die Beschleunigung, die das Fahrzeug auf der Straße erfahren würde, wenn es der berechneten Gesamtkraft ausgesetzt wäre.
8. Die Multiplikation mit der Abtastzeit des Regelkreises führt zum Geschwindigkeitsinkrement: innerhalb der Abtastzeit würde sich die Geschwindigkeit des Fahrzeuges auf der Straße um diesen Betrag ändern.
9. Das Geschwindigkeitsinkrement wird zur aktuellen Sollgeschwindigkeit addiert.
10. Im nächsten Abtastschritt wird die neue Sollgeschwindigkeit verwendet. Über die unterlagerten Regelkreise wird diese neue Sollgeschwindigkeit an allen vier Rollen zu erreichen versucht.

Der überlagerte Regelkreis (oberhalb der strichpunktierten Linien) ist abschaltbar, hierzu wird der Schalter 1 aus der abgebildeten Stellung umgeschaltet auf v_prüf (nicht abgebildet) .

Beim abgeschalteten Modus werden die Geschwindigkeiten der vier Rollen gemäß der Sollgeschwindigkeit geregelt. Ein übergeordneter Rechner gibt eine Fahrkurve mit den sich ändernden Sollgeschwindigkeiten vor. Es gibt keine Rückkopplung der Brems- oder Beschleunigungskräfte auf die Sollgeschwindigkeit. Der Betrieb im abgeschalteten Modus ist für an sich bekannte Tests, nämlich den statischen Bremstest, den Bremstest bei unterschiedlichen Geschwindigkeiten und den ABS-Test vorgesehen.

Folgende Tests können mit angeschaltetem Modus durchgeführt werden:

### 1. Anfahren aus dem Stillstand (bei Vorderradantrieb)

Auf dem Prüfstand befindet sich ein Fahrzeug mit Vorderradantrieb. Der Fahrer legt den ersten Gang ein, kuppelt ein und gibt Gas. Dabei wird auf die Vorderräder ein beschleunigendes Moment ausgeübt. Die Sollgeschwindigkeit ist zunächst 0, die Istgeschwindigkeit nimmt zu. Die vorderen Elektromotoren bauen ein Drehmoment auf, um die Sollgeschwindigkeit 0 zu halten. Innerhalb eines Abtastzeitraums wird das Drehmoment an den beiden vorderen Rollen umgerechnet in die Antriebskraft, mit der das Fahrzeug auf der Straße beschleunigt würde. Die sich einstellende Beschleunigung wird berechnet und die Sollgeschwindigkeit dementsprechend erhöht. Es stellt sich die Beschleunigung ein, die das Fahrzeug bei gleichen Bedingungen auf der Straße erfahren würde.

2. Bremsen aus mittlerer Fahrt (bei Hinterradantrieb) Auf dem Prüfstand befindet sich ein Fahrzeug mit Hinterradantrieb. Die Geschwindigkeit beträgt 50 km/h, der Fahrer hat ausgekuppelt. Betätigt der Fahrer die Bremse, so nimmt die Istgeschwindigkeit zunächst ab. Die Elektromotoren müssen ein beschleunigendes Moment auf die Rollen ausüben, um die Sollgeschwindigkeit wieder zu erreichen. Parallel dazu werden die Bremskräfte aller vier Räder addiert. Aus der Summe der vier Kräfte wird die Verzögerung berechnet, die das Fahrzeug auf der Straße erfahren würde. Die Sollgeschwindigkeit wird dementsprechend verringert und nähert sich der Istgeschwindigkeit an. Die Differenz zwischen Soll- und Istgeschwindigkeit wird also durch die Regelung klein gehalten, indem durch die Rückführung die Sollgeschwindigkeit der Istgeschwindigkeit angepasst wird. Die Verzögerung, die das Fahrzeug in der Realität auf der Straße erfahren würde, wird so simuliert.

### 3. Simulation einer Bergfahrt

Eine Bergfahrt wird dadurch simuliert, dass im nachgeführten Betrieb die Hangabtriebskraft Ft von der Antriebskraft des Fahrzeugs abgezogen wird. Bei konstanter Geschwindigkeit auf ebener Straße muss der Motor kein beschleunigendes Moment ausüben, wobei Rollreibung und Luftwiderstand zunächst vernachlässigt seien. Beginnt nun die Bergfahrt, so wird im überlagerten Regelkreis eine positive Kraft addiert, so dass die Gesamtantriebskraft aus physikalischer Sicht auf das Fahrzeug negativ ist. Daher tritt eine negative Beschleunigung auf, die Sollgeschwindigkeit wird verringert, das Fahrzeug wird langsamer. Um die Geschwindigkeit zu halten, muss der Fahrer Gas geben. Tut er dies nicht, so wird das Fahrzeug der Steigung entsprechend langsamer.

Aus den vorstehend genannten Beispielen gehen die Möglichkeiten einer realitätsnahen Simulation durch das beschriebene Verfahren zum Betrieb eines Rollenprüfstandes hervor.

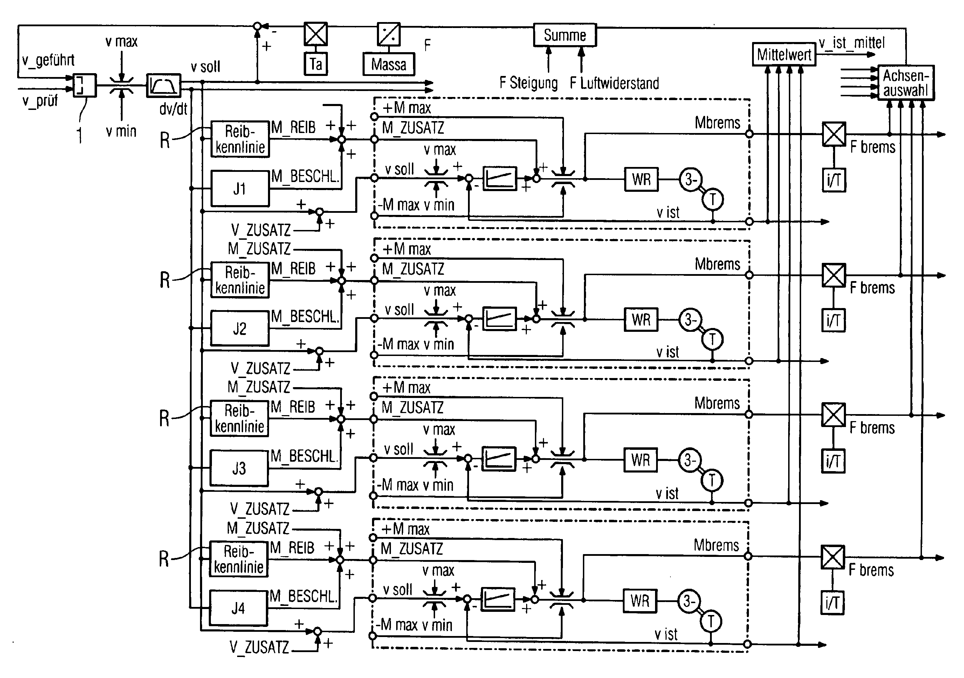

## Patentansprüche

1. Verfahren zum Betrieb eines Rollenprüfstandes zur Durchführung von Simulationsfahrten eines auf dem Rollenprüfstand angeordneten Fahrzeugs, wobei mindestens ein Rad des Fahrzeugs auf mindestens einer Rolle des Rollenprüfstandes aufliegt und wobei an der Rolle des Rollenprüfstandes ein Reaktionsmoment der Rolle gegenüber dem Rad des Fahrzeugs erfasst wird,
**dadurch gekennzeichnet, dass** aus dem Reaktionsmoment eine Beschleunigung ermittelt wird, der das Fahrzeug im realen Verkehr auf der Straße ausgesetzt wäre, und die Sollgeschwindigkeit der Rolle des Rollenprüfstandes anhand der ermittelten Beschleunigung korrigiert wird.

2. Verfahren nach Anspruch 1, wobei ausgehend vom Reaktionsmoment über den Radius der Rolle eine Reaktionskraft ermittelt wird.

3. Verfahren nach Anspruch 1 oder 2, wobei der Rollenprüfstand mehrere Rollen aufweist, ausgehend vom Reaktionsmoment über den Radius der Rollen Reaktionskräfte ermittelt werden und die ermittelten Reaktionskräfte addiert werden.

4. Verfahren nach Anspruch 3, wobei bei der Addition der Reaktionskräfte weitere Kräfte addiert werden.

5. Verfahren nach Anspruch 4, wobei als weitere Kraft eine Steigungskraft addiert wird.

6. Verfahren nach Anspruch 4 oder 5, wobei als weitere Kraft eine Luftwiderstandskraft addiert wird.

7. Verfahren nach einem der vorhergehenden Ansprüche, wobei die Masse m des Fahrzeugs bei der Ermittlung der Beschleunigung berücksichtigt wird.

8. Verfahren nach einem der vorhergehenden Ansprüche, wobei ausgehend vom Reaktionsmoment mindestens einer Rolle über den Radius der Rolle eine Reaktionskraft F ermittelt wird und daraus und der Masse m des Fahrzeugs die Beschleunigung nach der Formel a = F /m berechnet wird.

9. Rollenprüfstand zur Durchführung eines Verfahrens zum Betrieb eines Rollenprüfstandes nach einem der Ansprüche 1 - 8.

## Claims

1. Method for operating a roller test bench to carry out simulation drives of a vehicle placed on the test bench, with at least one wheel of the vehicle contacting at least one roller of the test bench and with a reaction torque of the roller in relation to the vehicle wheel being measured on the roller of the test bench
**characterized in that**
an acceleration is calculated from the reaction torque, said acceleration to which the vehicle would be exposed in actual on-road traffic and the setpoint speed of the rollers of the roller test bench is corrected with the aid of the calculated speed.

2. Method according to claim 1, with a reaction force being calculated on the basis of the reaction torque using the radius of the roller.

3. Method according to claim 1 or 2, with the roller test bench having a number or rollers and reaction forces being calculated on the basis of the reaction torque using the radius of the rollers and the calculated reaction forces being added.

4. Method according to claim 3, with additional forces being added when adding reaction force.

5. Method according to claim 4, with a gradient resistance being added as an additional force.

6. Method according to claim 4 or 5, with a drag force being added as a further force.

7. Method according to one of the preceding claims, with the mass m for the vehicle being taken into account when calculating the acceleration.

8. Method according to one of the preceding claims, with a reaction force F being calculated on the basis of the reaction torque of at least one roller using the radius of the roller and the acceleration being calculated therefrom and from the mass m of the motor vehicle according to the formula a = F/m.

9. Roller test bench for carrying out a method for operating a roller test bench according to one of claims 1 to 8.

## Revendications

1. Procédé pour faire fonctionner un banc d'essai à rouleaux pour la mise en oeuvre de simulations de trajets sur route d'un véhicule monté sur le banc d'essai à rouleaux, au moins une roue du véhicule étant en appui sur au moins un rouleau du banc d'essai à rouleaux et un couple de réaction du rouleau par rapport à la roue du véhicule étant enregistré sur le rouleau du banc d'essai à rouleaux,
**caractérisé en ce qu'**à partir du moment de réaction on détermine une accélération, à laquelle le véhicule serait exposé dans le trajet réel sur route, et on corrige la vitesse de consigne du rouleau du banc d'essai à rouleaux au moyen de l'accélération déterminée.

2. Procédé selon la revendication 1, dans lequel on détermine une force de réaction à partir du couple de réaction par le rayon du rouleau.

3. Procédé selon la revendication 1 ou 2, dans lequel le banc d'essai à rouleaux comporte plusieurs rouleaux, on détermine des forces de réaction à partir du couple de réaction par le rayon des rouleaux et on additionne les forces de réaction déterminées.

4. Procédé selon la revendication 3, dans lequel on additionne des forces supplémentaires lors de l'addition des forces de réaction.

5. Procédé selon la revendication 4, dans lequel on additionne une force de montée en tant que force supplémentaire.

6. Procédé selon la revendication 4 ou 5, dans lequel on additionne une force de résistance à l'air en tant que force supplémentaire.

7. Procédé selon l'une quelconque des revendications précédentes, dans lequel on prend en compte la masse m du véhicule lors de la détermination de l'accélération.

8. Procédé selon l'une quelconque des revendications précédentes, dans lequel à partir du moment de réaction d'au moins un rouleau sur le rayon du rouleau on détermine une force de réaction F et, à partir de celle-ci et de la masse m du véhicule, on calcule l'accélération selon la formule a = F / m.

9. Banc d'essai à rouleaux pour la mise en oeuvre d'un procédé pour faire fonctionner un banc d'essai à rouleaux selon l'une quelconque des revendications 1 à 8.
